# FASCICULE DE BREVET EUROPEEN

(11) **EP 0 587 474 B1**
(45) Date de publication et mention de la délivrance du brevet: **21.02.1996**
(21) Numéro de dépôt: 93402112.2
(22) Date de dépôt: 27.08.1993
(51) Int. Cl.: F01N 7/18, F01N 7/16, F16L 27/12

(54) **Dispositif de liaison entre deux pièces notamment ligne d'échappement de véhicule automobile**
Verbindungsvorrichtung zwischen zwei Bauteilen, insbesondere für Fahrzeugabgasleitungen
Joint device between two members especially for exhaust pipes of motor vehicles

(30) Priorité: 09.09.1992 FR 9210769
(43) Date de publication de la demande: 16.03.1994
(73) Titulaire: SOLLAC, F-92800 Puteaux (FR)
(72) Inventeur: Duboueix, Gilbert, F-78860 Saint-Nom-la-Bretèche (FR)
(74) Mandataire: Lanceplaine, Jean-Claude

(56) Documents cités:
- EP-A- 0 103 676
- EP-B- 0 105 546
- FR-A- 2 573 836
- PATENT ABSTRACTS OF JAPAN vol. 016, no. 098 (C-0918) 11 Mars 1992 & JP-A-03 277 761 (NIPPON STEEL CORP) 9 Décembre 1991
- PATENT ABSTRACTS OF JAPAN vol. 015, no. 216 (C-0837) 4 Juin 1991 & JP-A-03 064 415 (NIPPON STEEL CORP.) 19 Mars 1991
- PATENT ABSTRACTS OF JAPAN vol. 015, no. 150 (C-0824) 16 Avril 1991 & JP-A-03 028 359 (KAWASAKI) 6 Février 1991

## Description

La présente invention est relative à un dispositif de liaison entre deux pièces soumises à rotation ou à coulissement et utilisées à haute température, notamment pour une ligne d'échappement d'un moteur de véhicule automobile (p.e. FR-A-2573 836).

Les dispositifs de liaison soumis à des contraintes dues à des sollicitations mécaniques, thermiques dans des milieux chimiquement agressifs, ont des durées d'utilisation généralement limitées dans le temps, c'est notamment le cas dans les lignes d'échappement d'un moteur de véhicule automobile.

En effet, les lignes d'échappement comportent des pièces qui sont soumises à des contraintes de frottement, d'usure et à des températures de l'ordre de 400 à 850°C sous un flux de gaz de combustion.

Ces pièces généralement en métal sont adaptées pour résister à l'oxydation à chaud et présentent une tenue mécanique acceptable.

Or, certaines zones des lignes d'échappement et plus particulièrement les zones soumises à rotation ou à coulissement comme par exemple les dispositifs de liaison entre le collecteur d'échappement et le conduit de sortie dudit collecteur subissent une abrasion importante dans des temps d'utilisation très courts ce qui entraîne une rupture rapide des pièces.

Cette abrasion est d'autant plus importante que les lignes d'échappement sont soumises à des vibrations de manière continue.

La présente invention a pour but de proposer un dispositif de liaison formant un couple de frottement entre deux pièces soumises à rotation ou à coulissement et à des variations de température d'environ 600°C qui accepte des sollicitations en vibration importantes et qui présente une résistance à l'abrasion améliorée dans un milieu agressif constitué par les gaz de combustion.

La présente invention a pour objet un dispositif de liaison entre deux pièces soumises à rotation ou à coulissement et comportant chacune une surface de contact avec l'autre desdites pièces, l'une des pièces étant en métal et l'autre desdites pièces étant en matériau composite, caractérisé en ce que le métal constituant la première pièce est un acier aluminié à haute température et le matériau composite constituant la seconde pièce est formé d'une structure fibreuse compactée à chaud avec une charge et un agglomérant, ladite charge étant préalablement mélangée à une silicone.

Selon d'autres caractéristiques de l'invention :
- l'acier aluminié est un acier allié revêtu d 'aluminium par un procédé de trempé à chaud en continu et dont la composition pondérale est la suivante :
   - carbone de 0,01 à 0,03%
   - manganèse de 0,2 à 0,5%
   - soufre de 0,01 à 0,04%
   - titane de 0,1 à 0,3%
   - phosphore de 0,005 à 0,04%,
- l'acier aluminié est un acier allié revêtu d'aluminium par un procédé de trempé à chaud en continu et dont la composition pondérale est la suivante :
   - carbone de 0,002 à 0,015%
   - chrome de 0,6 à 1,2%
   - aluminium de 0,6 à 1,2%
   - niobium de 0,1 à 0,4%
   - titane de 0,1 à 0,4%,
- la température de compactage de la structure fibreuse est supérieure à 200°C,
- la charge est composée d'un carbone et/ou d'un carbonate,
- le carbonate est un carbonate de calcium, de potassium ou de sodium,
- l'agglomérant est une résine phénolique,
- la structure fibreuse est constituée par des fibres d'acier,
- la pièce en matériau composite est constituée par un joint d'étanchéité en forme de bague et de préférence une bague sphérique,
- la pièce en métal est constituée par un conduit muni à son extrémité destinée à coopérer avec la pièce en matériau composite d'une collerette.

La présente invention a également pour objet une ligne d'échappement pour un moteur de véhicule automobile, du type comportant un collecteur d 'échappement, un conduit de sortie du collecteur relié à un pot d'échappement et des moyens de raccordement entre le collecteur et le conduit de sortie, munis d'un joint d'étanchéité en matériau composite, caractérisée en ce que les moyens de raccordement sont formés par un dispositif de liaison tel que mentionné ci-dessus.

L'invention sera mieux comprise à l'aide de la description qui va suivre, donnée uniquement à titre d'exemple et faite en se référant aux dessins annexés, sur lesquels :
- la Fig. 1 est une vue schématique d'une ligne d'échappement d'un moteur de véhicule automobile,
- la Fig. 2 est une vue schématique en coupe du dispositif de liaison entre le collecteur et le conduit de sortie dudit collecteur.

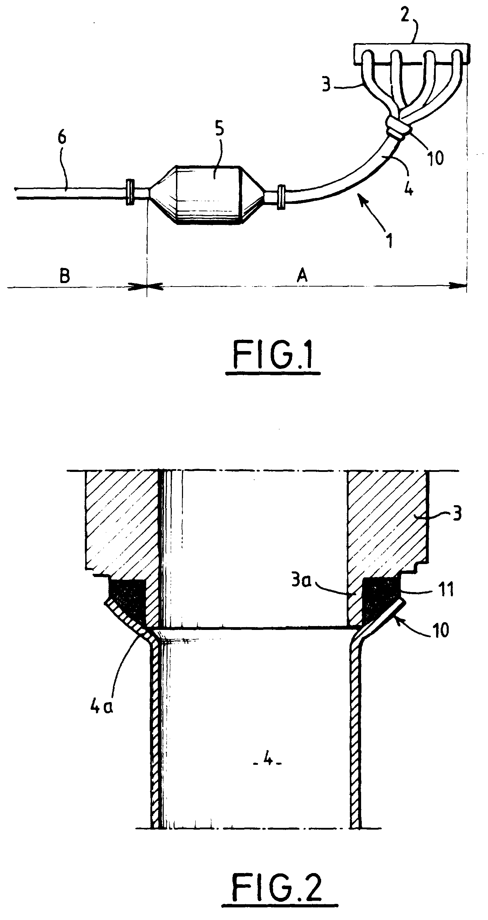

Ainsi que l'on peut le voir sur la Fig. 1, une ligne d'échappement désignée de manière générale par la référence 1, pour un moteur 2 par exemple à quatre cylindres, notamment de véhicule automobile, comporte un collecteur d'échappement désigné dans son ensemble par la référence 3.

Ce collecteur d'échappement 3 comprend par exemple quatre conduits dont chacun présente une extrémité reliée à un cylindre du moteur et une autre extrémité reliée à un conduit de sortie 4 de ce collecteur.

Ce conduit de sortie 4 est relié à un pot d'échappement qui comprend par exemple un convertisseur catalytique 5 et un conduit de liaison 6 à un silencieux non représenté.

La ligne d'échappement se compose de deux parties distinctes, une partie chaude A proche du moteur 2 qui regroupe le collecteur 3, le conduit de sortie 4 et le convertisseur catalytique 5 et une partie froide B, en aval du convertisseur catalytique 5, qui regroupe le conduit de liaison 6 et le silencieux.

Le collecteur d'échappement 3 et le conduit de sortie 4 de ce collecteur sont reliés entre eux par un dispositif de liaison désigné de façon générale par la référence 10 et représenté à la Fig. 2.

Le dispositif de liaison 10 forme un couple de frottement entre le collecteur 3 et le conduit de sortie 4 qui sont soumis à des mouvements de rotation ou de coulissement l'un par rapport à l'autre.

Le conduit de sortie 4 comporte à son extrémité dirigée vers le collecteur 3, une collerette 4a dont la surface interne est en contact avec la surface externe d'un joint 11 monté à l'extrémité 3a du collecteur 3 et qui assure l'étanchéité aux gaz d'échappement.

Le dispositif de liaison 10 comporte également un organe élastique non représenté de maintien du conduit de sortie 4 sur le joint 11, tout en autorisant le déplacement angulaire dudit conduit de sortie.

Le joint 11 est constitué par une bague et de préférence une bague sphérique.

Dans les lignes d'échappement comportant un convertisseur catalytique, les conditions de fonctionnement imposent une fonction supplémentaire de dépollution chimique des gaz par des compositions.

La partie chaude A est soumise à des températures qui varient avec les différents types de motorisation, de conduite et en fonction de la conception des lignes comme par exemple le calorifugeage, la ventilation....

L'exothermicité des réactions chimiques se développant dans le convertisseur catalytique 5 entraîne une élévation de température supplémentaire de la partie chaude d'environ 100°C et les gaz soumis à catalyse peuvent subir une élévation de température supplémentaire d'environ 100°C.

En sortie du collecteur d'échappement 3, le conduit de sortie 4 et l'enveloppe du convertisseur catalytique 5 peuvent atteindre des températures variant de 500 à 850°C.

L'augmentation de la température de la partie chaude modifie totalement le comportement des alliages constituant les éléments de cette partie chaude, d'une part, dans le domaine de la corrosion par oxydation des parties internes due aux gaz d'échappement et des surfaces externes par projection de boue et de sel, et d 'autre part, dans le domaine des contraintes dues aux sollicitations mécaniques et thermiques telles que vibrations et frottements, notamment à température élevée.

Des alliages mis au point ont permis d'apporter une solution à la corrosion de la partie chaude, comme par exemple des aciers aluminiés revêtus en continu par trempé à chaud dans un bain fondu d'aluminium.

Bien que ces aciers possède une bonne résistance à la corrosion chimique et il s'est avéré que du point de vue du frottement à haute température, il présente un taux d'usure non négligeable.

Pour un véhicule comportant une ligne d'échappement soumise à une température supérieure à 500°C et dont le dispositif de liaison 10 comporte une bague selon l'art antérieur constituée d'un tricot métallique chargé par exemple de graphite et/ou de mica, l'épaisseur du conduit de sortie 4 au niveau du collet 4a est réduite des deux tiers après un temps d'utilisation correspondant à un usage du véhicule sur une distance de 5 à 10000 kms.

Cette usure rapide entraîne la percée du conduit de sortie 4 et la destruction totale du dispositif de liaison 10.

Selon l'invention, l'acier aluminié constituant le conduit de sortie 4 est un acier allié revêtu d'aluminium par un procédé de trempé à chaud en continu et le joint 11 en matériau composite est formé d'une structure fibreuse compactée à chaud avec une charge et un agglomérant, ladite charge étant préalablement mélangée à une silicone.

La composition pondérale de l'acier allié est la suivante :
- carbone de 0,01 à 0,03%
- manganèse de 0,2 à 0,5%
- soufre de 0,01 à 0,04%
- titane de 0,1 à 0,3%
- phosphore de 0,005 à 0,04%, et de préférence la suivante :
   - 0,02% de carbone
   - 0,3% de manganèse
   - 0,02% de soufre
   - 0,2% de titane
   - 0,02% de phosphore.

Selon une variante, la composition pondérale de l'acier allié est la suivante :
- carbone de 0,002 à 0,015%
- chrome de 0,6 à 1,2%
- aluminium de 0,6 à 1,2%
- niobium de 0,1 à 0,4%
- titane de 0,1 à 0,4%
et de préférence la suivante :
- 0,01% de carbone
- 0,9% de chrome
- 0,9% d'aluminium
- 0,2% de niobium
- 0,2% de titane.

La température de compactage de la structure fibreuse composant le joint 11 est supérieure à 200°C.

La charge est composée d'un carbone et/ou d'un carbonate comme par exemple le carbonate de calcium, de potassium ou de sodium.

Cette charge peut également être constituée par une poudre ayant les caractéristiques d'un réfractaire tel que le nitrure de bore, l'alumine, le mica, l'oxyde de titane mélangé avec un liant ayant une bonne mouillabilité et une stabilité thermique tel qu'une silicone.

La charge par exemple de carbone est mélangée avec un diméthyle ou un phényle silicone, puis associée à des fibres d'acier et à une résine phénolique qui est l'agglomérant, lors d'un compactage, en moule, de la pièce en matériau composite à la température d'environ 250°C.

Il a été constaté que les dispositifs de liaison selon la présente invention ne génèrent aucune usure prématurée de la pièce en métal après les tests effectués dans les mêmes conditions.

Un tel dispositif de liaison peut convenir dans toutes autres applications comme par exemple pour des paliers de maintien de ligne, des éléments de guidage glissant ou coulissant dans des milieux soumis à des températures très élevées et à une corrosion en milieu humide et salin.

## Revendications

1. Dispositif de liaison entre deux pièces (4, 11) soumises à rotation ou à coulissement et comportant chacune une surface de contact avec l'autre desdites pièces, l'une (4) des pièces étant en métal et l'autre (11) desdites pièces étant en matériau composite, caractérisé en ce que le métal constituant la première pièce (4) est un acier aluminié à haute température et le matériau composite constituant la seconde pièce (11) est formé d'une structure fibreuse compactée à chaud avec une charge et un agglomérant, ladite charge étant préalablement mélangée à une silicone.

2. Dispositif selon la revendication 1, caractérisé en ce que l'acier aluminié est un acier allié revêtu d'aluminium par un procédé de trempé à chaud en continu et dont la composition pondérale est la suivante:
- carbone de 0,01 à 0,03%
- manganèse de 0,2 à 0,5%
- soufre de 0,01 à 0,04%
- titane de 0,1 à 0,3%
- phosphore de 0,005 à 0,04%.

3. Dispositif selon la revendication 2, caractérisé en ce que la composition pondérale de l'acier allié est de préférence la suivante :
- 0,02% de carbone
- 0,3% de manganèse
- 0,02% de soufre
- 0,2% de titane
- 0,02% de phosphore.

4. Dispositif selon la revendication 1, caractérisé en ce que l'acier aluminié est un acier allié revêtu d'aluminium par un procédé de trempé à chaud en continu et dont la composition pondérale est la suivante:
- carbone de 0,002 à 0,015%
- chrome de 0,6 à 1,2%
- aluminium de 0,6 à 1,2%
- niobium de 0,1 à 0,4%
- titane de 0,1 à 0,4%.

5. Dispositif selon la revendication 4, caractérisé en ce que la composition pondérale de l'acier allié est de préférence la suivante :
- 0,01% de carbone
- 0,9% de chrome
- 0,9% d'aluminium
- 0,2% de niobium
- 0,2% de titane.

6. Dispositif selon la revendication 1, caractérisé en ce que la température de compactage de la structure fibreuse est supérieure à 200°C.

7. Dispositif selon la revendication 1, caractérisé en ce que la charge est composée d'un carbone et/ou d'un carbonate.

8. Dispositif selon la revendication 7, caractérisé en ce que le carbonate est un carbonate de calcium, de potassium ou de sodium.

9. Dispositif selon la revendication 1, caractérisé en ce que l'agglomérant est une résine phénolique.

10. Dispositif selon la revendication 1, caractérisé en ce que la structure fibreuse est formée par des fibres d'acier.

11. Dispositif selon la revendication 1, caractérisé en ce que la pièce en matériau composite est constituée par un joint d'étanchéité (11) en forme de bague et de préférence d'une bague sphérique.

12. Dispositif selon l'une quelconque des revendications 1 à 5, caractérisé en ce que la pièce en métal est constituée par un conduit (4) muni à son extrémité destinée à coopérer avec la pièce (11) en matériau composite d'une collerette (4a).

13. Ligne d'échappement pour un moteur de véhicule automobile, du type comportant un collecteur d'échappement (3), un conduit de sortie (4) du collecteur relié à un pot d'échappement (5, 6) et des moyens (10) de raccordement entre le collecteur (3) et le conduit de sortie (4), munis d'un joint d'étanchéité (11) en matériau composite, caractérisée en ce que les moyens de raccordement sont formés par un dispositif de liaison (10) selon l'une quelconque des revendications précédentes.

14. Ligne d'échappement selon la revendication 13, caractérisée en ce que le conduit de sortie (4) est un acier aluminié à haute température.

15. Ligne d'échappement selon la revendication 13, caractérisée en ce que le joint d'étanchéité (11) en matériau composite est formé par une bague constituée d'une structure fibreuse compactée à chaud avec une charge et un agglomérant, ladite charge étant préalablement mélangée à une silicone.

## Patentansprüche

1. Verbindungsvorrichtung zwischen zwei Teilen (4, 11), die einer Dreh- oder Gleitbewegung ausgesetzt werden und jeweils eine Kontaktfläche mit dem anderen der Teile aufweisen, wobei einer der Teile (4) aus Metall besteht und der andere der Teile (11) aus einem Verbundwerkstoff besteht, dadurch gekennzeichnet, daß das Metall, aus dem der erste Teil (4) gebildet ist, ein bei hoher Temperatur alitierter Stahl ist und der Verbundwerkstoff, aus dem der zweite Teil (11) gebildet ist, aus einer Faserstruktur besteht, die mit einem Füllstoff und einem Agglomerationsmittel warmverdichtet wird, wobei der Füllstoff zuvor mit einem Silikon vermischt wird.

2. Vorrichtung nach Anspruch 1, dadurch gekennzeichnet, daß der alitierte Stahl ein Legierungsstahl ist, der durch ein kontinuierliches Warmhärtverfahren mit Aluminium bedeckt wird und dessen Gewichtszusammensetzung folgende ist:
- 0,01 bis 0,03% Kohlenstoff
- 0,2 bis 0,5% Mangan
- 0,01 bis 0,04% Schwefel
- 0,1 bis 0,3% Titan
- 0,005 bis 0,04% Phosphor.

3. Vorrichtung nach Anspruch 2, dadurch gekennzeichnet, daß die Gewichtszusammensetzung des Legierungsstahls vorzugsweise folgende ist:
- 0,02% Kohlenstoff
- 0,3% Mangan
- 0,02% Schwefel
- 0,2% Titan
- 0,02% Phosphor.

4. Vorrichtung nach Anspruch 1, dadurch gekennzeichnet, daß der alitierte Stahl ein Legierungsstahl ist, der durch ein kontinuierliches Warmhärtverfahren mit Aluminium bedeckt wird und dessen Gewichtszusammensetzung folgende ist:
- 0,002 bis 0,015% Kohlenstoff
- 0,6 bis 1,2% Chrom
- 0,6 bis 1,2% Aluminium
- 0,1 bis 0,4% Niobium
- 0,1 bis 0,4% Titan.

5. Vorrichtung nach Anspruch 4, dadurch gekennzeichnet, daß die Gewichtszusammensetzung des Legierungsstahls vorzugsweise folgende ist:
- 0,01% Kohlenstoff
- 0,9% Chrom
- 0,9% Aluminium
- 0,2% Niobium
- 0,2% Titan.

6. Vorrichtung nach Anspruch 1, dadurch gekennzeichnet, daß die Verdichtungstemperatur der Faserstruktur höher als 200°C ist.

7. Vorrichtung nach Anspruch 1, dadurch gekennzeichnet, daß der Füllstoff aus einem Kohlenstoff und/oder einem Karbonat besteht.

8. Vorrichtung nach Anspruch 7, dadurch gekennzeichnet, daß das Karbonat ein Kalzium-, Kalium- oder Natriumkarbonat ist.

9. Vorrichtung nach Anspruch 1, dadurch gekennzeichnet, daß das Agglomerationsmittel ein Phenolharz ist.

10. Vorrichtung nach Anspruch 1, dadurch gekennzeichnet, daß die Faserstruktur aus Stahlfasern gebildet wird.

11. Vorrichtung nach Anspruch 1, dadurch gekennzeichnet, daß der Teil aus Verbundwerkstoff aus einer Dichtung (11) in Form eines Ringes und vorzugsweise eines sphärischen Ringes gebildet wird.

12. Vorrichtung nach einem der Ansprüche 1 bis 5, dadurch gekennzeichnet, daß der Metallteil aus einer Leitung (4) besteht, die an ihrem Ende, das mit dem Teil (11) aus Verbundwerkstoff zusammenwirken soll, mit einem Flansch (4a) versehen ist.

13. Auspuffanlage für einen Kraftfahrzeugmotor jener Art, die einen Auspuffkrümmer (3) umfaßt sowie eine Ausgangsleitung (4) des Krümmers, die mit einem Auspufftopf (5, 6) verbunden ist, und Kuppelmittel (10) zwischen dem Krümmer (3) und der Ausgangsleitung (4), die mit einer Dichtung (11) aus Verbundwerkstoff versehen sind, dadurch gekennzeichnet, daß die Kuppelmittel aus einer verbindungsvorrichtung (10) nach einem der vorangehenden Ansprüche gebildet werden.

14. Auspuffanlange nach Anspruch 13, dadurch gekennzeichnet, daß die Ausgangsleitung (4) ein Stahl ist, der bei hoher Temperatur alitiert wurde.

15. Auspuffanlange nach Anspruch 13, dadurch gekennzeichnet, daß die Dichtung (11) aus Verbundwerkstoff aus einem Ring gebildet wird, der aus einer Faserstruktur besteht, die mit einem Füllstoff und einem Agglomerationsmittel warmverdichtet wurde, wobei der Füllstoff zuvor mit einem Silikon vermischt wurde.

## Claims

1. Device for interconnecting two components (4, 11) subjected to rotation or to sliding and each having a surface of contact with the other one of the said components, one (4) of the components being made of metal and the other one (11) of the said components being made of a composite material, characterised in that the metal constituting the first component (4) is a steel coated with aluminium at high temperature, and the composite material forming the second component (11) is formed from a fibrous structure compacted hot with a filler and a binder, the said filler having been previously mixed with a silicone.

2. Device according to Claim 1, characterised in that the aluminium-coated steel is an alloyed steel coated with aluminium by means of a continuous hot dipping process, and whose composition by weight is as follows:
- carbon 0.01 to 0.03%
- manganese 0.2 to 0.5%
- sulphur 0.01 to 0.04%
- titanium 0.1 to 0.3%
- phosphorus 0.005 to 0.04%.

3. Device according to Claim 2, characterised in that the composition by weight of the alloyed steel is as follows:
- 0.02% carbon
- 0.3% manganese
- 0.02% sulphur
- 0.2% titanium
- 0.02% phosphorus.

4. Device according to Claim 1, characterised in that the aluminium-coated steel is an alloyed steel coated with aluminium by means of a continuous hot dipping process, and whose composition by weight is as follows:
- carbon 0.002 to 0.015%
- chromium 0.6 to 1.2%
- aluminium 0.6 to 1.2%
- niobium 0.1 to 0.4%
- titanium 0.1 to 0.4%

5. Device according to Claim 4, characterised in that the composition by weight of the alloyed steel is preferably as follows:
- 0.01% carbon
- 0.9% chromium
- 0.9% aluminium
- 0.2% niobium
- 0.2% titanium

6. Device according to Claim 1, characterised in that the temperature of compacting of the fibrous structure is above 200°c.

7. Device according to Claim 1, characterised in that the filler is composed of a carbon and/or a carbonate.

8. Device according to Claim 7, characterised in that the carbonate is a calcium, potassium or sodium carbonate.

9. Device according to Claim 1, characterised in that the binder is a phenolic resin.

10. Device according to Claim 1, characterised in that the fibrous structure is formed by steel fibres.

11. Device according to Claim 1, characterised in that the component made of a composite material consists of a sealing joint (11) in the shape of a ring, preferably a spherical ring.

12. Device according to any one of Claims 1 to 5, characterised in that the metal component consists of a pipe (4) provided, at its end designed to cooperate with the component (11) made of a composite material, with a collar (4a).

13. Exhaust unit for the engine of a motor vehicle, of the type having an exhaust manifold (3), an outlet pipe (4) for the manifold connected to an exhaust pipe (5, 6) and means (10) for connecting the manifold (3) to the outlet pipe (4), provided with a sealing joint (11) made of a composite material, characterised in that the connection means are formed by a connection device (10) according to any one of the preceding claims.

14. Exhaust unit according to Claim 13, characterised in that the outlet pipe (4) is made of a steel coated with aluminium at high temperature.

15. Exhaust unit according to Claim 13, characterised in that the sealing joint (11) made of a composite material is formed by a ring consisting of a fibrous structure compacted hot with a filler and a binder, the said filler having been previously mixed with a silicone.
